# EUROPÄISCHE PATENTANMELDUNG

(11) **EP 4 549 405 A1**
(43) Veröffentlichungstag der Anmeldung: **07.05.2025**
(21) Anmeldenummer: 23207867.5
(22) Anmeldetag: 06.11.2023
(51) Int. Cl.: C02F 1/32

(54) **UV-WASSERDESINFEKTIONSVORRICHTUNG MIT INTEGRIERTER STROMVERSORGUNG**

(71) Anmelder: Röhrich, Markus, 8574 Lengwil (CH)
(72) Erfinder: Röhrich, Markus, 8574 Lengwil (CH)
(74) Vertreter: Gleim, Christian Ragnar

(57) **Zusammenfassung**

UV-Wasserdesinfektionsvorrichtung mit integrierter Stromversorgung, umfassend:
- einen Leitungsabschnitt, durch den zu desinfizierendes Wasser fließt,
- eine UV-Lichtquelle, die derart ausgebildet und am Leitungsabschnitt angeordnet ist, um das durch den Leitungsabschnitt fließende Wasser mit UV-Licht zu bestrahlen und zu desinfizieren, und
- eine Stromversorgungseinheit, die durch den Fluss des im Leitungsabschnitt fließenden Wassers antreibbar ist, so dass ein elektrischer Strom für die UV-Lichtquelle erzeugt wird, um das durch den Leitungsabschnitt fließende Wasser mit UV-Licht zu desinfizieren.

## Beschreibung

Die Erfindung betrifft eine UV-Wasserdesinfektionsvorrichtung mit integrierter Stromversorgung.

Es ist bekannt, Trinkwasser mithilfe von ultravioletter (kurz: UV) Strahlung zu behandeln und somit von Keimen zu befreien. Die hochenergetische UV-Strahlung deaktiviert dabei die Mikroorganismen, sodass sie nicht mehr schädlich sind und sich darüber hinaus auch nicht mehr reproduzieren können. Bei ausreichender Konzentration der UV-Strahlung ist das Wasser somit keimfrei und sein Verzehr unbedenklich.

Dabei hat die Wasserdesinfektion mit UV-Strahlung vor allem den Vorteil, dass die Deaktivierung der Keime ohne den Einsatz von für die Natur oder den Menschen schädliche Chemikalien erfolgt. Außerdem können auch Mikroorganismen deaktiviert werden, die resistent gegen gängige Chemikalien zur Desinfektion sind und es entstehen keine möglicherweise ebenso schädliche Nebenprodukte.

Aufgrund dieser und weiterer Vorteile gibt es ein vielfältiges Angebot an Anlagen für UV-Wasserdesinfektion, welche zumeist aus einem Edelstahlrohr bestehen, welches in ein bestehendes Wasserleitungssystem eingefügt werden kann. Das Wasser wird dann innerhalb des Rohrs an einer UV-Lampe vorbei geleitet, welche das Wasser dann im Vorbeifließen mit UV-Strahlung desinfiziert. Somit finden sie Anwendung in Wohnhäuser, aber auch zum Beispiel in Brunnen, Teichen oder Wohnmobilen.

Diese UV-Wasserdesinfektionsanlagen haben jedoch den Nachteil, dass zum Betreib eine externe Stromversorgung, oft die Versorgung mit Netzstrom, von Nöten ist. Oft ist dort, wo Wasser desinfiziert werden muss, elektrischer Strom jedoch nur begrenzt oder gar nicht verfügbar.

Es ist die Aufgabe der Erfindung eine UV-Wasserdesinfektionsvorrichtung mit integrierter Stromversorgung bereitzustellen, der die Nachteile im Stand der Technik überwindet und insbesondere keine externe Stromversorgung benötigt.

Diese Aufgabe wird durch eine UV-Wasserdesinfektionsvorrichtung mit integrierter Stromversorgung gemäß dem unabhängigen Anspruch gelöst. Vorteilhafte Ausgestaltungen bilden den Gegenstand der jeweiligen Ansprüche.

Die Erfindung umfasst eine UV-Wasserdesinfektionsvorrichtung mit integrierter Stromversorgung, umfassend einen Leitungsabschnitt, durch den zu desinfizierendes Wasser fließt, eine UV-Lichtquelle und eine Stromversorgungseinheit. Die UV-Lichtquelle ist derart ausgebildet und am Leitungsabschnitt angeordnet, um das durch den Leitungsabschnitt fließende Wasser mit UV-Licht zu bestrahlen und zu desinfizieren. Die Stromversorgungseinheit, die durch den Fluss des im Leitungsabschnitt fließenden Wassers antreibbar ist, erzeugt einen elektrischer Strom für die UV-Lichtquelle, um das durch den Leitungsabschnitt fließende Wasser mit UV-Licht zu desinfizieren. Durch die Stromversorgungseinheit ist keine externe Stromversorgung benötigt. Allein die Kraft des fließenden Wassers reicht aus um die UV-Lichtquelle mit Strom zu versorgen. Somit ist die UV-Wasserdesinfektionsvorrichtung autark und kann auch an beliebigen Orten ohne externe Stromversorgung verwendet werden.

Bevorzugt umfasst die Stromversorgungseinheit ein Wasserrad oder eine Turbine. Beides ermöglicht es, die Energie des fließenden Wasser nutzbar zu machen. So bewegt das durch den Leitungsabschnitt fließende Wasser das Wasserrad oder die Turbine. Denkbar ist insbesondere, dass das Wasserrad, die Turbine oder die ganze Stromversorgungseinheit außerhalb des Leitungsabschnitts, beispielsweise in einem zweiten Leitungsabschnitt oder an nicht zur UV-Wasserdesinfektionsvorrichtung gehörenden Bestandteilen des Wasserleitsystems, anzuordnen.

Vorteilhafterweise umfasst dabei die Stromversorgungseinheit einen Stromgenerator, welcher Stromgenerator durch das Wasserrad oder die Turbine antreibbar ist. Dabei wird die Rotation des Wasserrad oder die Turbine auf den Generator übertragen. Somit wird die mechanische Energie des Wasserrads oder der Turbine in elektrische Energie umgewandelt und für die UV-Lichtquelle nutzbar gemacht.

Gemäß eines bevorzugten Aspekts ist der Stromgenerator derart ausgebildet, um einen Strom mit einer Spannung im Bereich von 0,1 V bis 30 V zur Versorgung der UV-Lichtquelle zu erzeugen. Diese ist mit dem Stromgenerator über einen nach außen isolierten elektrischen Leiter innerhalb und/oder außerhalb des Leitungsabschnitts verbunden.

Gemäß eines technischen Vorteils ist der Leitungsabschnitt ein starres Rohr oder ein flexibler Schlauch. Das verwendete Material des Rohrs oder Schlauchs ist dabei derart gewählt, um gegen Wasser, UV-Strahlung und äußere Einflüsse beständig zu sein.

Bevorzugt ist der Leitungsabschnitt derart ausgebildet, um die UV-Lichtquelle umfassen zu können, sodass die UV-Lichtquelle das im Leitungsabschnitt fließende Wasser desinfiziert. Die Maße des Leitungsabschnitts haben dabei auch eine Auswirkung auf die Fließgeschwindigkeit des Wassers also damit, wie schnell das Wasser an der UV-Lichtquelle vorbeifließt.

Gemäß eines technischen Aspekts der ist Leitungsabschnitt abschnittsweise transparent oder vollständig transparent ausgebildet. Dabei ist darauf zu achten, dass keine UV-Strahlen in die Umgebung gelangen, da diese für den Menschen schädlich sind. Somit ist es denkbar, dass die UV-Wasserdesinfektionsvorrichtung zudem eine Abdeckung umfasst.

Vorteilhafterweise ist der Leitungsabschnitt derart ausgebildet, sodass der Leitungsabschnitt in ein bestehendes Wasserleitungssystem als Festinstallation integriert oder mobil verwendet werden kann. Als mobile Anwendung ist dabei die Anordnung an einen Wasserhahn eines mobilen Wassercontainers denkbar, wobei die UV-Wasserdesinfektionsvorrichtung einfach und schnell anbringbar und entfernbar ist.

Bevorzugt ist die UV-Lichtquelle, innerhalb des Leitungsabschnitts oder außerhalb des transparenten Leitungsabschnitts angeordnet ist, sodass die UV-Lichtquelle das im UV-Leitungsabschnitt fließende Wasser desinfiziert. Dabei kann die UV-Lichtquelle mittig innerhalb des Leitungsabschnitts angebracht sein, sodass sie von allen Seiten von Wasser umströmt ist, oder an der inneren Leitungsabschnittswand. Bei der Anbringung der UV-Lichtquelle an der inneren Leitungsabschnittswand oder außerhalb des Leitungsabschnitts erfolgt bevorzugt eine gerichtete Abstrahlung der UV-Strahlen der UV-Lichtquelle in Richtung des Wassers.

Gemäß eines technischen Aspekts weist die UV-Lichtquelle eine Leistung von 1 W bis zu 1000 W, insbesondere 10 W bis 100 W aufweist. Um eine zuverlässige Entkeimung des Wasser zu gewährleisten, muss dessen Durchfluss dementsprechend angepasst werden. Um den Durchfluss derart anzupassen, sodass von der Stromversorgungseinheit genug Leistung erzeugt wird und die Leistung der UV-Lichtquelle ausreicht um das Wasser zu entkeimen, kann die UV-Wasserdesinfektionsvorrichtung eine Regeleinheit für den Wasserfluss umfassen. Mit dieser wird der Wasserfluss so geregelt, dass die Stromversorgungseinheit mehr Leistung, insbesondere genau so viel Leistung erzeugt wie für die Entkeimung des Wassers notwendig ist.

Im Folgenden wird die Erfindung anhand von in den beigefügten Zeichnungen dargestellten Beispielen näher erläutert.

Es zeigen:
- Fig. 1: eine erfindungsgemäße UV-Wasserdesinfektionsvorrichtung mit einem Wasserrad und einer Lichtquelle innerhalb des Leitungsabschnitts, und
- Fig. 2: eine erfindungsgemäße UV-Wasserdesinfektionsvorrichtung mit einer Turbine und einer Lichtquelle außerhalb des Leitungsabschnitts.

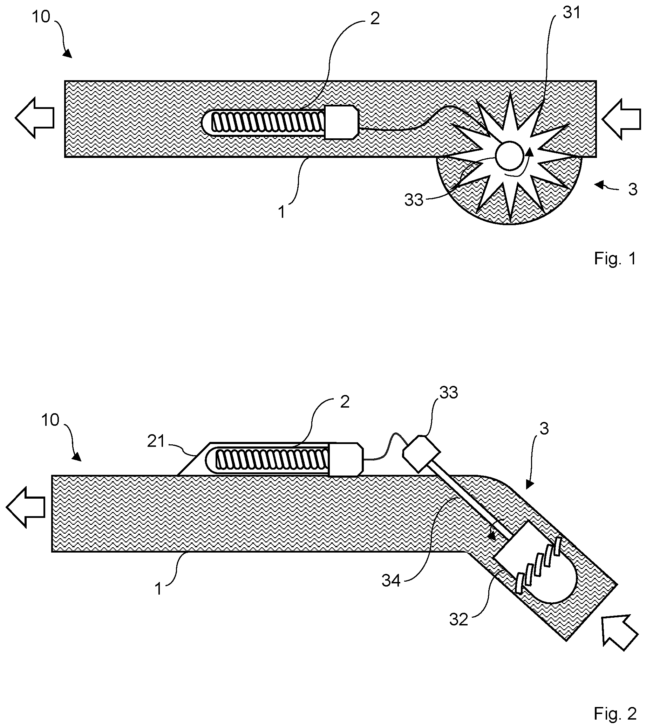

In **Fig. 1** ist eine erfindungsgemäße UV-Wasserdesinfektionsvorrichtung 10 mit einem Wasserrad 31 als Teil der Stromversorgungseinheit 3 und einer Lichtquelle 2 innerhalb des Leitungsabschnitts 1. Das Wasser fließt dabei durch den Leitungsabschnitt 1, in der gewählten Darstellung von rechts nach links. Der Leitungsabschnitt 1 ist dabei ein geradliniges Rohr oder ein Schlauch, dessen Grundfläche bei dem Wasserrad 31 verändert ist um das Wasserrad 31 funktionsfähig in den Leitungsabschnitt 1 zu integrieren. Im Falle eines Rohrs eignet sich eine Fertigung aus Edelstahl aufgrund seiner Beständigkeit. Die Maße des Leitungsabschnitts 1 sind derart gewählt, um die UV-Lichtquelle 2 umfassen und zu desinfizierendes Wasser an ihr vorbeileiten zu können. Der Leitungsabschnitt 1 ist derart ausgebildet, sodass er in ein bestehendes Wasserleitungssystem als Festinstallation integriert oder mobil verwendet werden kann. Dafür können beispielsweise Gewinde- oder Steckanschlüsse an den Ende angeordnet sein.

Die UV-Lichtquelle 2 ist in der dargestellten Ausführung zentral innerhalb des Leitungsabschnitts 1 platziert, sodass das Wasser an allen Seiten an ihr vorbeifließt. Eine Platzierung außerhalb des Leitungsabschnitts 1 ist in Fig. 2 gezeigt. Die UV-Lichtquelle hat dabei eine Leistung von 10 W bis 100 W, mit der sie das durch den Leitungsabschnitt 1 fließende Wasser mit UV-Strahlen bestrahlt und dieses damit desinfiziert. Die UV-Lichtquelle 2 ist zu ihrer Versorgung an einer Stromversorgungseinheit 3 angeschlossen.

Die Stromversorgungseinheit 3 umfasst einen Stromgenerator 33 und in der betrachteten Ausführung ein Wasserrad 31. Sie ist durch den Fluss des im Leitungsabschnitt 1 fließenden Wassers antreibbar und erzeugt elektrischen Strom um die UV-Lichtquelle 2 zu betreiben. Das Wasserrad 31 wir durch den Fluss des Wassers in Rotation gesetzt. Diese Rotation wird auf einen Stromgenerator 33, beispielsweise ein Drehstromgenerator, übertragen und treibt diesen an. Dabei erzeugt er eine Spannung im Bereich von 0,1 V bis 30 V, wodurch es zu einer Versorgung der UV-Lichtquelle 2 mit Strom kommt. Es ist gezeigt, dass sich die Stromversorgungseinheit 3 in Fließrichtung vor der UV-Lichtquelle 2 angeordnet ist, sodass das fließende Wasser die Stromversorgungseinheit 3 vor der UV-Lichtquelle 2 erreicht und diese frühzeitig mit Strom versorgen kann.

Eine Ausführung einer erfindungsgemäßen UV-Wasserdesinfektionsvorrichtung 10 mit einer zu der Stromversorgungseinheit 3 gehörigen Turbine 32 ist in **Fig. 2** dargestellt. Die Turbine 32 wird durch den Fluss des Wassers in Rotation versetzt, wodurch der Stromgenerator 33 angetrieben wird. In dieser Darstellung ist ersichtlich, wie die Rotation der Turbine 32 über eine Welle 34 auf den Stromgenerator 33 übertragen wird. In dieser Ausführung ist der Stromgenerator 33 dabei außerhalb des Leitungsabschnitts 1 angeordnet. Dafür ist der Leitungsabschnitt 1 gebogen ausgebildet, sodass eine gerade Welle 34 ohne Gelenk verwendet werden kann. Die Ausführung des Leitungsabschnitts 1 kann dabei an die Bedingungen des bestehenden Leitungssystems, der Stromversorgungseinheit 3 oder der UV-Lichtquelle 2 angepasst werden.

Die ist UV-Lichtquelle 2 ebenfalls außerhalb des Leitungsabschnitts 1 angeordnet. Dabei ist der Leitungsabschnitt 1 abschnittsweise transparent oder vollständig transparent ausgebildet. Dabei muss darauf geachtet werden, dass das verwendete transparente Material für Licht der entsprechenden Wellenlängen transparent ist. Da UV-Strahlung sehr kurzwellig ist, wird es von vielen Materialien absorbiert. Ein geeignetes Material dafür ist Quarzglas, aber auch bestimmte Kunststoffe sind UVdurchlässig. Da anders als in dem Ausführungsbeispiel aus Fig. 1 das Wasser nicht auf allen Seiten der UV-Lichtquelle 2 vorbeifließt, ist es vorteilhaft das Licht der UV-Lichtquelle 2 in die Richtung des Wasser zu lenken um die abgestrahlte Leistung bestmöglich nutzen zu können. Um Mensch und Umgebung vor der gefährlichen UV-Strahlung zu schützen ist eine Abdeckung 21 zur Abschirmung transparenter Abschnitte des Leitungsabschnittes 1 geeignet.

Die Anordnung eines Wasserrads 31 oder einer Turbine 32 an der UV-Wasserdesinfektionsvorrichtung 10 ist unabhängig davon, ob sich die UV-Lichtquelle 2 innerhalb oder außerhalb des Leitungsabschnitts 1 befindet.

## Patentansprüche

1. UV-Wasserdesinfektionsvorrichtung (10) mit integrierter Stromversorgung, umfassend:
- einen Leitungsabschnitt (1), durch den zu desinfizierendes Wasser fließt,
- eine UV-Lichtquelle (2), die derart ausgebildet und am Leitungsabschnitt (1) angeordnet ist, um das durch den Leitungsabschnitt (1) fließende Wasser mit UV-Licht zu bestrahlen und zu desinfizieren, und
- eine Stromversorgungseinheit (3), die durch den Fluss des im Leitungsabschnitt (1) fließenden Wassers antreibbar ist, so dass ein elektrischer Strom für die UV-Lichtquelle (2) erzeugt wird, um das durch den Leitungsabschnitt fließende Wasser mit UV-Licht zu desinfizieren.

2. UV-Wasserdesinfektionsvorrichtung (10) nach Anspruch 1, wobei die Stromversorgungseinheit (3) ein Wasserrad (31) oder eine Turbine (32) umfasst.

3. UV-Wasserdesinfektionsvorrichtung (10) nach Anspruch 2, wobei die Stromversorgungseinheit (3) einen Stromgenerator (33) umfasst, welcher Stromgenerator (33) durch das Wasserrad (31) oder die Turbine (32) antreibbar ist.

4. UV-Wasserdesinfektionsvorrichtung (10) nach Anspruch 3, der Stromgenerator (33) derart ausgebildet ist, um einen Strom mit einer Spannung im Bereich von 0,1 V bis 30 V zur Versorgung der UV-Lichtquelle (2) zu erzeugen.

5. UV-Wasserdesinfektionsvorrichtung (10) nach einem der vorangegangenen Ansprüche, wobei der Leitungsabschnitt (1) ein starres Rohr oder ein flexibler Schlauch ist.

6. UV-Wasserdesinfektionsvorrichtung (10) nach einem der vorangegangenen Ansprüche, wobei der Leitungsabschnitt (1) derart ausgebildet ist, um die UV-Lichtquelle (2) umfassen zu können, sodass die UV-Lichtquelle (2) das im Leitungsabschnitt (1) fließende Wasser desinfiziert.

7. UV-Wasserdesinfektionsvorrichtung (10) nach einem der vorangegangenen Ansprüche, wobei der Leitungsabschnitt (1) abschnittsweise transparent oder vollständig transparent ausgebildet ist.

8. UV-Wasserdesinfektionsvorrichtung (10) nach Anspruch 7, wobei die UV-Lichtquelle (2), innerhalb des Leitungsabschnitts (1) oder außerhalb des transparenten Leitungsabschnitts (1) angeordnet ist, sodass die UV-Lichtquelle (2) das im Leitungsabschnitt (1) fließende Wasser desinfiziert.

9. UV-Wasserdesinfektionsvorrichtung (10) nach einem der vorangegangenen Ansprüche, wobei der Leitungsabschnitt (1) derart ausgebildet ist, sodass der Leitungsabschnitt (1) in ein bestehendes Wasserleitungssystem als Festinstallation integriert oder mobil verwendet werden kann.

10. UV-Wasserdesinfektionsvorrichtung (1) nach einem der vorangegangenen Ansprüche, wobei die UV-Lichtquelle (2) eine Leistung von 1 W bis zu 1000 W, insbesondere 10 W bis 100 W aufweist.
